# EUROPÄISCHE PATENTSCHRIFT

(11) **EP 2 441 561 B1**
(45) Veröffentlichungstag und Bekanntmachung des Hinweises auf die Patenterteilung: **11.05.2016**
(21) Anmeldenummer: 11008362.3
(22) Anmeldetag: 18.10.2011
(51) Int. Cl.: B29C 47/90

(54) **Verfahren zum Anfahren einer Rohrextrusionslinie**
Method for starting a pipe extrusion line
Procédé pour la conduite d'une ligne d'extrusion de tuyaux

(30) Priorität: 18.10.2010 DE 102010048579
(43) Veröffentlichungstag der Anmeldung: 18.04.2012
(73) Patentinhaber: INOEX GmbH, 32547 Bad Oeynhausen (DE)
(72) Erfinder: Klose, Reinhard, 31737 Rinteln (DE); Diekhaus, Brigitte, 33659 Bielefeld (DE)
(74) Vertreter: Seewald, Jürgen

(56) Entgegenhaltungen:
- EP-A1- 1 602 273
- EP-A1- 1 701 147
- WO-A1-2004/089605
- WO-A1-2009/049374
- DE-A1- 2 731 834
- DE-U1- 20 221 671
- DE-U1-202004 020 766
- FR-A- 1 414 390

## Beschreibung

Die vorliegende Erfindung betrifft ein Verfahren gemäß dem Oberbegriff des Anspruchs 1.

Rohrextrusionslinien weisen einen Extruder mit einem Werkzeug, einem so genannten Rohrkopf, eine Kalibrier- und Kühleinheit und ggf. weitere Kühltanks sowie eine Abzugseinheit auf. Im normalen Betrieb wird das extrudierte Rohr von der Abzugseinheit, die meistens als Raupenabzug ausgebildet ist, mit der erforderlichen Geschwindigkeit durch die Extrusionslinie gezogen.

Beim Anfahren befindet sich in aller Regel kein Rohr in der Extrusionslinie. Es wird daher mit einem Anfahrrohr gearbeitet. Das Anfahrrohr muss vom hinteren Ende der Extrusionslinie durch alle Einrichtungen "hindurchgefädelt" werden, bis sein vorderes Ende aus der Kalibrier- und Kühleinheit ragt. Es kann dann mit dem aus dem Rohrkopf austretenden Schmelzeschlauch, z. B. durch Verschweißen, verbunden werden. Nach der Herstellung dieser Verbindung wird mit der Abzugseinheit Zug auf das Anfahrrohr ausgeübt, so dass letztendlich das mit dem Anfahrrohr verbundene, neu produzierte Rohr in die Abzugseinheit einläuft. Die Aufgabe des Anfahrrohrs Ist damit erledigt.

Diese aus dem Stand der Technik bekannte Vorgehensweise hat einige Nachteile. So muss das Anfahrrohr möglichst den gleichen Durchmesser haben wie das zu produzierende Rohr, damit die Enddichtung der Kalibrier-und Kühleinheit, die gegen die Atmosphäre abdichtet, an dem Anfahrrohr anliegt und in der Kalibrier- und Kühleinheit sofort mit einem Unterdruck gearbeitet werden kann. Andernfalls würde sich der Ausschuss des neu produzierten Rohres erhöhen. Zudem sollten das produzierte Rohr und das Anfahrrohr möglichst aus dem gleichen Material bestehen, um die Schweißverbindung optimal herstellen zu können. Ein weiterer Nachteil beim Anfahren einer Extrusionslinie mit einem Anfahrrohr ist darin zu sehen, dass dieses von hinten in voller Länge durch die Extrusionslinie "gefädelt" werden muss. Dabei kann es zur Beschädigung von Anlagenteilen kommen. Des Weiteren ist dieser "Einfädelvorgang" bei großen Metergewichten des Anfahrrohrs im wahrsten Sinne des Wortes sehr beschwerlich.

Die o. g. Nachteile werden bei einem Anfahrsystem vermieden, dass in der DE 202 21 671 U1 offenbart ist. Bei diesem System wird mit einem so genannten Ankopplungskopf gearbeitet. Dieser ragt zum Anfahren der Extrusionslinie in Richtung Rohrkopf aus der Kalibrier- und Kühleinheit heraus. Der Ankopplungskopf besitzt einen zylindrischen Vorsprung, mit dem der aus dem Rohrkopf austretende Schmelzeschlauch z. B. durch Verschweißen oder durch Verklemmen verbunden werden kann. Der Ankopplungskopf ist mit einer Zugvorrichtung verbunden. Diese Zugvorrichtung weist z. B. ein Seil auf, das vom Ankopplungskopf durch die gesamte Extrusionslinie geführt und am hinteren Ende mit einer Winde verbunden ist. Nach dem Verbinden des aus dem Rohrkopf austretenden Schmelzeschlauchs mit dem Ankopplungskopf wird mittels der Zugvorrichtung Zug auf den Ankopplungskopf und damit auf das produzierte Rohr ausgeübt. Sobald der Ankopplungskopf die Abzugseinheit passiert hat, übernimmt diese den weiteren Abzug des hergestellten Rohres in der Rohrextrusionslinie.

Beim Anfahren wird in dem zwischen dem Rohrkopf und dem Ankopplungskopf befindlichen Innenraum des Schmelzeschlauchs durch Druckluftzufuhr ein Überdruck erzeugt. Da in der Kalibrier- und Kühleinheit noch Atmosphärendruck herrscht, wird der Schmelzeschlauch aufgrund der Druckdifferenz gegen eine Kallbriereinrichtung, z. B. eine Kalibrierhülse, gedrückt. Dadurch erhält das produzierte Rohr gleich zu Beginn den gewünschten Außendurchmesser, so dass der Ausschuss beim Anfahren reduziert werden kann. Nachdem der Ankopplungskopf eine am Auslauf der Kalibrier- und Kohleinheit angeordnete Dichtung passiert hat, legt sich diese selbsttätig oder zwangsgesteuert dichtend an das produzierte Rohr an, so dass in der Kalibrier- und Kühleinheit ein Vakuum erzeugt und die Druckluftzufuhr in den Innenraum des Schmelzeschlauchs abgestellt werden kann. Da die Druckdifferenz zwischen dem Rohrinnenraum und der Kalibrier-und Kühleinheit weiter besteht, kann die Kalibrierung des Rohres ununterbrochen fortgesetzt werden.

Nachteilig an der in der DE 202 21 671 U1 beschriebenen Technik ist, dass weiterhin eine Verbindung zwischen dem aus dem Rohrkopf austretenden Schmelzeschlauch und dem Ankopplungskopf hergestellt werden muss. Des Weiteren ist dafür Sorge zu tragen, dass das Zugseil die Extrusionslinie ziemlich mittig durchläuft, um Verkantungen des Ankopplungskopfes zu vermeiden.

Die DE 10 2005 028 085 A1 beschreibt eine Vorrichtung zum Verbinden von zwei Rohrenden. Bei dieser Anfahrtechnik wird ebenfalls wieder mit einem Anfahrrohr gearbeitet, allerdings wird dieses in einem Ausführungsbeispiel nicht direkt mit dem Schmelzeschlauch verbunden, sondern über ein Gegenstück, um das der Schmelzeschlauch gelegt ist. Das Gegenstück ist über eine Zugöse und ein Seil mit einem Anschlagdom verbunden, der über Spreizmittel im Anfahrrohr festlegbar ist.

In der WO 2004/089605 A1 Ist eine Extrusionslinie für Kunststoffrohre beschrieben. In dieser Extrusionslinie eine erste Abzugseinheit hinter der Kalibrier- und Kühleinrichtung angeordnet und eine zweite Abzugseinheit weiter stromabwärts hinter einer Expansionseinheit angeordnet. Die beiden Abzugseinheiten werden mit unterschiedlichen Geschwindigkeiten betrieben, um das zwischen ihnen befindliche Rohr zu recken und damit die Eigenschaften des Rohres zu beeinflussen. Des Weiteren sind in dieser Extrusionslinie vor der Expansionseinheit Kontrollräder angeordnet, mit denen die Geschwindigkei beeinflusst wird, mit der das Rohr in die Expansionseinheit einläuft.

Die WO 2009/049374 A1 beschreibt eine Extrusionslinie, welche die gleichen Merkmale aufweist, wie in der WO 2004/089605 A1 beschrieben.

DE 2 731 834 offenbart eine wertere Rohrextrusionslinie mit einer Kalibrierungsvorrichtung.

Aufgabe der vorliegenden Erfindung ist es, ein Verfahren und eine Vorrichtung zum Anfahren einer Rohrextrusionslinie zur Verfügung zu stellen, das bzw. die gänzlich ohne Zugmittel auskommt und damit deren Nachteile vermeidet.

Diese Aufgabe wird erfindungsgemäß mit einem Verfahren gelöst, welches die Merkmale des Anspruchs 1 aufweist.

Bei dem erfindungsgemäßen Verfahren wird das extrudierte Rohr nicht mehr durch die Extrusionslinie gezogen sondern geschoben. Dazu ist zumindest in der Kalibrier- und Kühleinheit nach der Kalibrierhülse eine Schubvorrichtung vorgesehen, die eine Schubkraft auf das extrudierte Rohr ausübt. Die aus dem Stand der Technik bekannten Anfahrhilfsmittel, wie Anfahrrohre, Zugselle u.s.w. und die damit einher gehenden Nachteile werden somit vermieden.

Da die Kalibrier- und Kühleinheit in einer ersten Anfahrphase noch unter Atmosphärendruck steht, weil das vorgeschobene Rohr noch nicht an einer Dichtung anliegt, die die Kalibrier- und Kühleinheit durch Anlage an dem extrudierten Rohr gegenüber der Atmosphäre abdichtet, muss dafür Sorge getragen werden, dass das noch nicht starre Rohr In der Kalibrier- und Kühleinheit von innen gestützt wird, damit es nicht in sich zusammenfällt. Das wird dadurch erreicht, dass entweder in dem Rohr gegenüber dem Innenraum der Kalibrier- und Kühleinheit ein Überdruck erzeugt wird, z.B. durch Druckluftzufuhr, oder aber dadurch, dass das Rohr durch eine mechanische Innenführung körperlich gestützt wird. Sobald das produzierte Rohr die Dichtung passiert hat, wird in der Kalibrier- und Kühleinheit ein Unterdruck erzeugt, so dass das Rohr auf den gewünschten Außendurchmesser kalibriert werden kann. Die Druckluftzufuhr bei der ersten Stützvariante wird gestoppt.

Aufgrund der erfindungsgemäßen Lösung kann nicht nur auf die bisher üblichen Anfahrhilfen verzichtet werden, sondern auch auf die Abzugseinheit am Ende der Extrusionslinie. Falls der durch die in der Kalibrier- und Kühleinheit angeordneten Schubvorrichtung auf das Rohr ausgeübte Schub nicht ausreicht, um das Rohr bis zum Ende der Extrusionslinie vorzuschieben, können in der Extrusionslinie gegebenenfalls eine oder mehrere weitere Schubvorrichtungen, z. B. in oder nach den Kühltanks, vorgesehen werden.

Es ist aber auch möglich, die zumindest eine Schubvorrichtung nur als Anfahrhilfe zu verwenden und wie üblich eine Abzugseinheit am Ende der Extrusionslinie vorzusehen. Diese übernimmt dann, wie im Normalbetrieb einer Extrusionslinie üblich, den weiteren Antrieb des extrudierten Rohres. Der Antrieb der zumindest einen Schubvorrichtung kann dann abgestellt werden.

Weitere vorteilhafte Ausgestaltungen der Erfindung ergeben sich aus den Unteransprüchen.

Die Erfindung wird nachstehend anhand von Ausführungsbeispielen näher erläutert. In der dazugehörigen Zeichnung zeigt:
- Fig. 1: eine Extrusionslinie zur Herstellung von Kunststoffrohren mit ihren Hauptkomponenten in schematischer Darstellung,
- Fig. 2: einen schematischen Schnitt durch eine Kalibrier-und Kühleinheit zur Durchführung eines erfindungsgemäßen Anfahrvorganges am Beginn des Durchlaufs eines Rohres durch die Kalibrier-und Kühleinheit,
- Fig. 3: eine Darstellung gemäß Fig. 2 in einem mittleren Stadium des Durchlaufs eines Rohres durch die Kalibrier-und Kühleinheit,
- Fig. 4: eine Darstellung gemäß Fig. 2 nach dem Durchlauf eines Rohres durch die Kalibrier-und Kühleinheit,
- Fig. 5: eine schematische Vorderansicht einer Schubvorrichtung in einer ausschnittsweisen Darstellung, und
- Fig. 6: eine Seitenansicht der Schubvorrichtung nach Fig. 5.

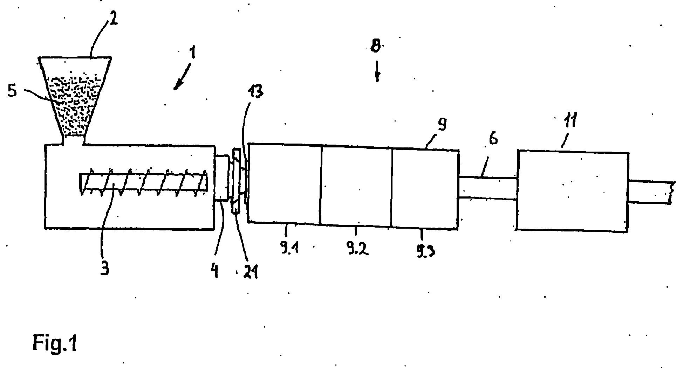

Die in Fig. 1 dargestellte Extrusionslinie umfasst einen Extruder 1 mit einem Aufgabetrichter 2, einer Extruderschnecke 3 und einem Rohrkopf 4. Über den Aufgabetrichter 2 wird ein thermoplastischer Kunststoff 5 in Granulat- oder Pulverform dem Extruder 1 zugeführt. In dem Extruder 1 wird das Granulat bzw. Pulver erwärmt, geknetet und plastifiziert. Anschließend wird der Kunststoff als formbare Masse durch die Extruderschnecke in den Rohrkopf 4 gefördert und dort durch einen ringförmigen Durchtrittsspalt gedrückt.

Nach dem Austritt aus dem Rohrkopf 4 tritt das heiße, noch verformbare Rohr (Schmelzeschlauch) 6 durch den von dem Extruder 1 erzeugten Extrusionsdruck in eine Kalibrier- und Kühleinheit 8 ein, die einen Vakuumtank 9 mit einer an dessem Einlauf angeordneten, perforierten Kalibrierhülse 10 aufweist. Die Kalibrierhülse 10 ist stufenlos im Durchmesser einstellbar, so dass das extrudierte, noch verformbare Rohr 6 auf den gewünschten Wert fixiert werden kann. Nach dem Verlassen der Kalibrier- und Kühleinheit 8 tritt das Rohr 6 in einen Kühltank 11 (oder auch in mehrere nacheinander) ein, wo es auf etwa Raumtemperatur abgekühlt wird.

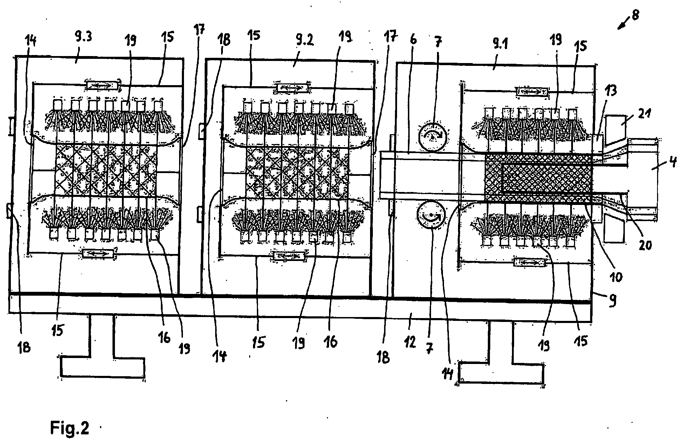

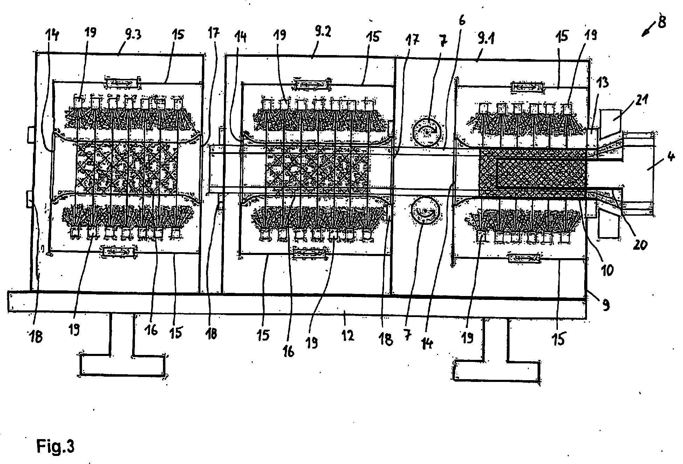

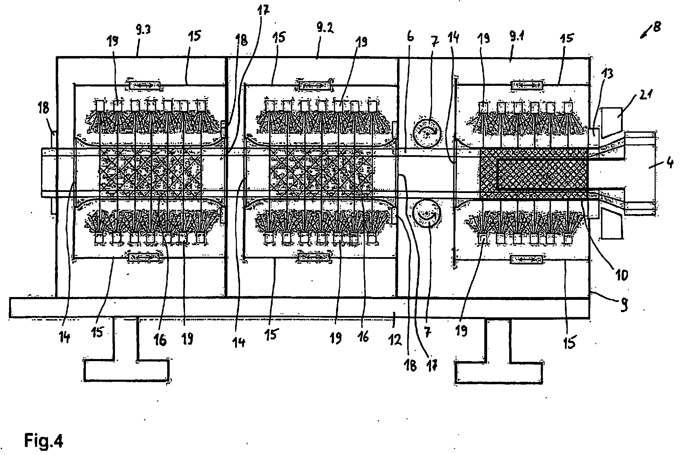

Die in den Figuren 2 bis 4 dargestellte Kalibrier- und Kühleinheit 8 besitzt einen Vakuumtank 9, der aus drei Sektionen 9.1, 9.2 und 9.3 zusammengesetzt ist. Diese Sektion 9.1, 9.2 und 9.3 sind auf einem Bett 12 der Kalibrier- und Kühleinheit 8 gegeneinander verschiebbar, so dass sie voneinander beabstandet werden können, wie das in Figur 2 dargestellt ist.

In der ersten Sektion 9.1 der Kalibrier- und Kühleinheit 8 ist die Kalibrierhülse 10 angeordnet. Diese besitzt einen ringförmigen Einlaufkopf 13 und einen ringförmigen Auslasskopf 14. Während der Einlaufkopf 13 außerhalb der Sektion 9.1 angeordnet ist, öffnet sich der Auslasskopf 14 in die Sektion 9.1. Der Auslaufkopf 14 ist gegenüber dem ortsfesten Einlaufkopf 13 in Axialrichtung der Kalibrierhülse 10 verlagerbar. Dazu sind zwei Spindeleinheiten 15 vorgesehen, mit deren Hilfe der Auslaufkopf 14 zu dem Einlaufkopf 13 hin bzw. weg verlagert werden kann, wodurch sich der Durchmesser der Kalibrierhülse 10 vergrößert bzw. verkleinert. Zum weiteren Aufbau der Kalibrierhülse 10 wird zwecks Vermeidung von Wiederholungen auf die DE 10 2005 002 820 B3 verwiesen, in der die Kalibrierhülse 10 und ihre Funktion ausführlich beschrieben ist.

Zu den Einbauten der ersten Sektion 9.1 der Kalibrier- und Kühleinheit 8 gehört weiterhin eine Schubvorrichtung 7, die in Durchlaufrichtung des Rohres 6 nach der Kalibrierhülse 10 angeordnet und in den Fig. 2 bis 4 nur schematisch dargestellt ist. Diese Schubvorrichtung 7 ist auf den jeweils in der Extrusionslinie gefahrenen Rohrdurchmesser einstellbar bzw. stellt sich selbsttätig auf diesen ein. Eine mögliche Ausführungsform einer Schubvorrichtung 7 ist in den Fig. 5 und 6 dargestellt.

In den Sektionen 9.2, 9.3 des Vakuumtanks 9 sind Stützvorrichtungen 16 für das extrudierte Rohr 6 vorgesehen, deren Aufbau im Wesentlichen dem der Kalibrierhülse 10 entspricht. Ein wesentlicher Unterschied zu der Kalibrierhülse 10 besteht darin, dass die Einlaufköpfe 17 wie die Auslaufköpfe 14 einen fixen Durchmesser haben. Zum weiteren Aufbau der Stützvorrichtungen 16 wird auf die DE 103 180 037 B3 verwiesen, in der diese Stützvorrichtungen 16 ausführlich beschrieben sind.

Am Auslauf jeder der Sektionen 9.1, 9.2 und 9.3 ist eine Dichtung 18 angeordnet, durch die das produzierte Rohr 6 hindurch läuft. Die Dichtungen 18 sind auf den Außendurchmesser des produzierten Rohres 6 einstellbar. Wenn die Dichtungen 18 am Außenumfang des produzierten Rohres 6 anliegen, dichten sie die Sektionen 9.1, 9.2 und 9.3 gegenüber der Atmosphäre ab.

Zu den Einbauten der Sektionen 9.1, 9.2 und 9.3 gehören weiterhin Sprühdüsen 19, mit denen zur Kühlung Wasser auf die Rohroberfläche gesprüht wird. Soweit es noch ergänzende Erläuterungen zum Aufbau und zur Funktion der Sprühdüse 19 bedarf, wird auf die DE 10 2008 037 874 A1 verwiesen, die zwecks weiterer Beschreibung der Sprühdüsen 19 zum Gegenstand des Ausführungsbeispiels gemacht wird.

Vom Rohrkopf 4 ragt axial ein Stützzylinder 20 ab, der sich durch den Einlaufkopf 13 hindurch koaxial in die Kalibrierhülse 10 hineinerstreckt. Konzentrisch zum Stützzylinder 20 ist eine Stützscheibe 21 angeordnet, die aus radial verstellbaren Segmenten besteht und den Abstand zwischen dem Rohrkopf 4 und dem Einlaufkopf 13 im Wesentlichen ausfüllt.

Nachstehend wird anhand der Figuren 2 bis 4 der Anfahrvorgang einer Rohrextrusionslinie beschrieben.

Nach dem Austritt aus dem Rohrkopf 4 wird das heiße, noch verformbare Rohr 6 aufgrund des durch den Extruder 1 aufgebauten Extrusionsdruckes, außen von der Stützscheibe 21 geführt (nicht dargestellt), in den Einlauf 13 der Kalibrierhülse 10 gedrückt, wo sich das Rohr 6 an die Außenfläche des Stützzylinders 20 anlegt. Für eine gute Gleitreibung ist der Stützzylinder 20 mit einer PTFE-Beschichtung versehen. Das Rohr 6 wird nun weiter auf dem Stützzylinder 20 durch die Kalibrierhülse 10 geschoben. Deren Innendurchmesser ist so eingestellt, dass ein geringfügiger Abstand zur Rohroberfläche besteht. Während des Durchlaufs des Rohres 6 durch den Vakuuntank 9 wird es in allen Sektionen 9.1, 9.2 und 9.3 durch die Sprühdüse 19 ständig gekühlt. Nach dem Austritt des Rohres 6 aus der Kalibrierhülse 10 wird es durch die Schubvorrichtung 7 erfasst und von dieser durch die Extrusionslinie geschoben. Die Stützscheibe 21 kann nun aufgefahren werden, wie in den Fig, 2 bis 4 dargestellt ist, da eine Abstützung des heißen, noch verformbaren Rohres 6 an dieser Stelle nicht mehr erforderlich ist.

Sobald das Rohr 6 aus der Sektion 9.1 austritt, wird deren Dichtung 18 radial auf das Rohr 6 zugestellt, so dass die Dichtung 18 dichtend am Umfang des Rohres 6 anliegt. Gleichzeitig wird in der Sektion 9.1 ein Unterdruck erzeugt, so dass das Rohr 6 aufgrund der Druckdifferenz zwischen dem Rohrinnenraum und dem Innenraum der Sektion 9.1 an die Innenfläche der Kalibrierhülse 10 gedrückt wird.

Nach dem Schließen der Dichtung 18 der Sektion 9.1 wird die Sektion 9.2 an die Sektion 9.1 herangefahren. Das Rohr 6 durchläuft nun die Sektion 9.2 und wird beim Verlassen dieser Sektion 9.2 von der Dichtung 18 dichtend umschlossen. Nun wird auch in der Sektion 9.2 Unterdruck angelegt und die Sektion 9.3 an die Sektion 9.2 herangefahren. Das Rohr 6 durchläuft jetzt die Sektion 9.3, die nach dem Austritt des Rohres 6 und Schließen der Dichtung 18 ebenfalls unter Unterdruck gesetzt wird.

Das Rohr 6 wird nach dem Verlassen der Kalibrier-und Kühleinheit 8 durch die nachfolgenden Einrichtungen der Extrusionslinie bis zu deren Ende geschoben. Eine sonst üblicher Weise am Ende einer Extrusionslinie vorgesehene Abzugseinheit kann auf Grund der Schubvorrichtung 7 entfallen. Wenn die durch die in der Kalibrier- und Kühleinheit 8 angeordneten Rohrabstützung 7 auf das Rohr 6 übertragende Schubkraft nicht ausreicht, um das Rohr 6 bis zum Ende der Extrusionslinie zu schieben, kann bzw. können gegebenenfalls eine oder mehrere weitere Schubvorrichtungen 7, z. B. vor, im oder hinter dem Kühltank 11 vorgesehen werden, die dann wahlweise auch zu- oder abgeschaltet werden.

Im oben stehenden Ausführungsbeispiel wurde der Stützzylinder 20 als stationäre Einrichtung beschrieben. Er kann vorteilhafter Weise auch so ausgeführt sein, dass er in den Rohrkopf 4 einfahrbar ist, da er nach dem Anfahren keine Funktion mehr hat.

In einem weiteren, nicht dargestellten Ausführungsbeispiel entsprechen Aufbau und Funktion der Kalibrier- und Kühleinheit 8 dem bzw. der des vorstehenden Ausführungsbeispiels. Bei diesem Ausführungsbeispiel wird das extrudierte Rohr 6 bei seinem Durchlauf durch die erste Sektion 9.1 des Vakuumtanks 9 nicht durch einen Stützzylinder gestützt, sondern durch einen Innendruck. Dazu wird in das aus dem Rohrkopf 4 austretende heiße, noch verformbare Rohr 6 bei aufgefahrener Stützscheibe 21 ein Verschlusskörper eingelegt, an den das Rohr 6 dichtend anbackt. Der Rohranfang wird nun mit dem einliegenden Verschlusskörper in die Kalibrierhülse 10 eingeführt. Gleichzeitig wird über eine durch den Rohrkopf 4 geführte Druckluftleitung Druckluft in das Rohrinnere eingeführt und die Stützscheibe 21 zur äußeren Abstützung des Rohres 6 zugefahren. Aufgrund des Überdrucks im Rohrinneren legt sich dieses an die Innenfläche der Kalibrierhülse 10 an. Nach dem Auslaufen des Rohres 6 aus der Kalibrierhülse 10 wird es von der Schubvorrichtung 7 erfasst und weiter durch die Extrusionslinie geschoben.

Nach dem Durchlaufen der Sektion 9.1 wird deren Dichtung 18 zugefahren. Gleichzeitig wird in der Sektion 9.1 Unterdruck erzeugt und die Druckluftzufuhr in das Rohrinnere gesperrt. Aufgrund der weiterhin vorliegenden Druckdifferenz bleibt das Rohr 6 in Anlage an die Kalibrierhülse 10, d.h., das Rohr 6 wird kalibriert.

Das Rohr 6 durchläuft anschließend die beiden weiteren Sektionen 9.2 und 9.3 des Vakuumtanks 9, wie im vorherigen Ausführungsbeispiel beschrieben.

In dem oben beschriebenen Ausführungsbeispiel sind die Sektionen 9.1, 9.2 und 9.3 des Vakuumtanks 9 gegeneinander verfahrbar, so dass sie voneinander beabstandet werden können. Diese Lösung hat den Vorteil, dass dadurch im Vakuumtank 9 Inspektionslücken geschaffen werden können, durch die das produzierte Rohr 6 bei seinem Durchlauf durch den Vakuumtank 9 beobachtet werden kann.

Für die vorliegende Erfindung ist eine derartige Verfahrbarkeit der Sektionen 9.1, 9.2 und 9.3 nicht erforderlich. Es reicht aus, wenn der Vakuumtank 9 schottartig in drei Sektionen unterteilt ist, wobei jeder Sektion am Auslauf eine Dichtung 18 zugeordnet ist. Ebenso kann der Vakuumtank 9 auch nur aus einer Sektion bestehen.

In den Fig. 5 und 6 ist eine mögliche Ausführungsform einer Schubvorrichtung 7 dargestellt. Sie weist einen konzentrisch zum anzutreibenden Rohr 6 angeordneten, drehantreibbaren Zahnkranz 22 sowie vier Spindeleinheiten 23 auf, von denen sich jeweils zwei diametral gegenüber liegen.

In den Fig. 5 und 6 ist nur eine dieser Spindeleinheiten 23 dargestellt. Jede Spindeleinheit 23 besitzt eine Gewindespindel 24 und eine Spindelmutter 25. Die Spindelmuttern 25 weisen jeweils einen Außenzahnrad 26 auf, das mit dem Zahnkranz 22 kämmt, und sind drehbar in einem ortsfesten Support 27 gelagert.

An dem dem Rohr 6 zugewandten Ende jeder Gewindespindel 24 ist drehbar eine Rolle 28 gelagert. Diese Rollen 28 sind jeweils über einen Rollenmotor 29 aktiv und synchron drehantreibbar.

Die Schubvorrichtung 7 ist auf den jeweils in der Rohrextrusionslinie gefahrenen Rohrdurchmesser einstellbar. Dazu wird der Zahnkranz 22 in Drehantrieb versetzt, wodurch die mit dem Zahnkranz 22 über die Zahnräder 26 kämmenden Spindelmuttern 25 synchron drehangetrieben werden. Die Gewindespindeln 24 und damit auch die Rollen 28 werden dadurch translatorisch und synchron in die eine oder andere Richtung, je nach Drehrichtung des Zahnkranzes 22, bewegt, bis die Rollen 28 die Oberfläche des Rohres 6 kontaktieren. Da die Rollen 28 durch die Rollenmotoren 29 synchron gleichgerichtet angetrieben werden, üben sie eine Schubkraft auf das Rohr 6 aus, so dass dieses durch die Extrusionslinie geschoben wird.

## Patentansprüche

1. Verfahren zum Betreiben einer Rohrextrusionslinie,
wobei die Extrusionslinie einen Extruder (1) mit einem Aufgabetrichter (2), einer Extruderschnecke (3) und einem Rohrkopf (4) umfasst, wobei über den Aufgabetrichter (2) ein thermoplastischer Kunststoff (5) in Granulat- oder Pulverform dem Extruder 1 zugeführt wird, und in dem Extruder (1) das Granulat bzw. Pulver erwärmt, geknetet und plastifiziert wird, und anschließend der Kunststoff als formbare Masse durch die Extruderschnecke in den Rohrkopf 4 gefördert und dort durch einen ringförmigen Durchtrittsspalt gedrückt wird, und nach dem Austritt aus dem Rohrkopf (4) das heiße, noch verformbare Rohr (6) durch den von dem Extruder (1) erzeugten Extrusionsdruck in eine Kalibrier- und Kühleinheit (8), die einen Vakuumtank (9) mit einer an dessem Einlauf angeordneten, perforierten Kalibrierhülse (10) aufweist, eintritt,
wobei beim Anfahren der Rohrextrusionslinie das extrudierte Rohr die Kalibrier- und Kühleinheit durchläuft,
wobei die Kalibrier- und Kühleinheit (8) in einer ersten Anfahrphase, in der das Rohr (6) eine Dichtung (18) der Kalibrier- und Kühleinheit (8) gegen die Atmosphäre noch nicht passiert hat, unter Atmosphärendruck steht, und
in einer zweiten Anfahrphase, in der das Rohr (6) diese Dichtung (18) passiert hat, unter Unterdruck gesetzt wird,
wobei das Rohr (6) in der ersten Anfahrphase durch inneren Überdruck oder
eine mechanische Innenführung (20) gestützt wird,
***dadurch gekennzeichnet,* dass**
das extrudierte Rohr (6) durch mindestens eine mindestens in der Kalibrier- und Kühleinheit (8) nach der Kalibrierhülse (10) vorgesehene, eine Schubkraft auf das extrudierte Rohr (6) übertragende Schubvorrichtung (7) durch die Extrusionslinie geschoben wird.

2. Verfahren nach Anspruch 1, **dadurch gekennzeichnet, dass** die Schubvorrichtung (7) auf den jeweils in der Extrusionslinie gefahrenen Rohrdurchmesser einstellbar Ist bzw. sich selbsttätig auf diesen einstellt.

## Claims

1. Method for operating a pipe extrusion line,
wherein said extrusion line comprises an extruder (1) having a delivery hopper (2), an extruder screw (3) and a pipe head (4), wherein a thermoplastic plastic (5) is fed to the extruder (1) in granulate or powder form via the delivery hopper (2), and the granulate or powder is heated up, kneaded and plasticised within the extruder (1), and the plastic is then conveyed, in the form of a mouldable mass, through the extruder screw (3) into the pipe head (4) where it is pressed through an annular passage gap and, after passing out of the pipe head (4), the hot pipe (6), which is still workable, passes, because of the extrusion pressure produced by the extruder (1), into a calibrating and cooling unit (8) which has a vacuum tank(9) having a perforated calibration sleeve (10) arranged at the inlet of said tank,
wherein the extruded pipe runs through the calibrating and cooling unit when the pipe extrusion line is started up,
wherein said calibrating and cooling unit (8) is under atmospheric pressure in a first starting-up phase in which the pipe (6) has not yet passed through a seal (18) belonging to the calibrating and cooling unit (8) towards the atmosphere, and
said calibrating and cooling unit is placed under negative pressure in a second starting-up phase in which the pipe (6) has passed through the said seal (18),
wherein the pipe (6) is supported by internal positive pressure or by a mechanical internal guide (20) in the first starting-up phase,
***characterised in* that**
the extruded pipe (6) is pushed through the extrusion line by at least one pushing device (7) which is provided at least in the calibrating and cooling unit (8) downstream of the calibration sleeve (10) and which transmits a pushing force to the extruded pipe (6).

2. Method according to Claim 1,
**characterised in that**
the pushing device (7) can be set, or sets itself automatically, to the particular pipe diameter which is being conveyed within the extrusion line.

## Revendications

1. Procédé d'exploitation d'une ligne d'extrusion de tubes, la ligne d'extrusion comprenant une extrudeuse (1) avec une trémie d'alimentation (2), une vis extrudeuse (3) et une tête tubulaire (4), extrudeuse, à laquelle est amenée une matière artificielle thermoplastique (5) sous forme de granulé ou de poudre et dans laquelle le granulé ou la poudre étant réchauffé, pétri et déformé, après quoi la matière artificielle est transportée comme masse déformable par la vis extrudeuse vers la tête tubulaire 4, où elle est pressée à travers une fente de passage tubulaire, et, une fois qu'il a quitté la tête tubulaire (4), le tube (6) chaud, toujours déformable, pénètre, sous l'effet de la pression d'extrusion générée par l'extrudeuse, dans une unité de calibrage et de refroidissement (8) qui présente un réservoir de vide (9), à l'entrée duquel est disposée une douille de calibrage perforée (10),
le tube extrudé traversant l'unité de calibrage et de refroidissement lors du démarrage de la ligne d'extrusion de tubes,
l'unité de calibrage et de refroidissement (8) étant sous pression atmosphérique au cours d'une première phase de démarrage, au cours de laquelle le tube (6) n'a pas encore traversé un joint d'étanchéité vis-à-vis de l'atmosphère (18) de l'unité de calibrage et de refroidissement (8), et
l'unité de calibrage et de refroidissement (8) étant mise sous dépression au cours d'une seconde phase de démarrage, au cours de laquelle le tube (6) a traversé ce joint d'étanchéité (18),
le tube (6) étant supporté au cours de la première phase de démarrage par une surpression interne ou un guidage intérieur mécanique (20),
***caractérisé en ce que***
le tube extrudé (6) est poussé à travers la ligne d'extrusion par au moins un dispositif de poussée (7) prévu au moins dans l'unité de calibrage et de refroidissement (8), en aval de la douille de calibrage (10), dispositif de poussée qui transmet une force de poussée au tube extrudé (6).

2. Procédé suivant la revendication 1, ***caractérisé en ce que*** le dispositif de poussée (7) est réglable ou se règle automatiquement au diamètre de tube respectivement produit dans la ligne d'extrusion.
